# EUROPEAN PATENT APPLICATION

(11) **EP 4 782 612 A1**
(43) Date of publication of application: **29.07.2026**
(21) Application number: 23953167.6
(22) Date of filing: 21.09.2023
(51) Int. Cl.: E02F 9/24, E02F 9/26, E02F 9/20, G06F 3/14, G08B 21/02, G08B 3/10, G08B 5/22

(54) **ALARM CONTROL SYSTEM FOR CONSTRUCTION MACHINERY**

(71) Applicant: Volvo Construction Equipment AB, 631 85 Eskilstuna (SE)
(72) Inventor: YANG, Sumin, Changwon-si, Gyeongsangnam-do 51710 (KR); YOON, Gijun, Changwon-si, Gyeongsangnam-do 51710 (KR)
(74) Representative: Kransell & Wennborg KB
(86) International application number: PCT/KR2023/014447
(87) International publication number: WO 2025/063342

(57) **Abstract**

One aspect of the present disclosure discloses an alarm control system for construction machinery that includes a sensor unit configured to detect attitude information of the construction machinery; an operation lever configured to operate the construction machinery; a setting unit configured to set a work restriction area for the construction machinery; a visual alarm unit configured to actuate a visual alarm when the construction machinery approaches the work restriction area; an audible alarm unit configured to actuate an audible alarm when the construction machinery approaches the work restriction area; and an alarm control unit configured to: calculate a remaining distance or a remaining angle from the construction machinery to the work restriction area, and actuate the visual alarm unit and the audible alarm unit when the calculated remaining distance or the calculated remaining angle is equal to or less than a previously stored reference value; determine, based on a signal from the operation lever, whether the construction machinery is likely to intrude into the work restriction area, and prevent actuation of the audible alarm unit when the construction machinery is not likely to intrude into the work restriction area even when the calculated remaining distance or the calculated remaining angle is equal to or less than the reference value.

## Description

### Technical Field

The present disclosure generally relates to construction machinery. In certain embodiments, the present disclosure relates to an alarm control system for construction machinery. The present disclosure may be applied to large vehicles, such as trucks, buses, and construction equipment. The present disclosure may be described with respect to a particular vehicle; however, the present disclosure is not limited to any specific vehicle.

### Background

In general, when using construction heavy equipment, such as an excavator equipped with a multi-joint working device including a boom, an arm, and a bucket, to perform work in confined sites such as yards where hazardous materials like gas cylinders are stored, subway construction sites, or sites where gas pipes, water pipes, and the like are buried at a predetermined depth, the working range of the working device is restricted to a predetermined extent in order to improve work safety and constructability.

For example, when high-voltage power lines are present above an excavator, the operator may establish a work restriction area above the excavator so that the boom, arm, and bucket of the working device do not extend beyond the work restriction area. In this case, in a conventional excavator, when the working device approaches a work restriction area, a buzzer is used to provide an auditory alarm to the operator.

However, in conventional excavators, because the buzzer was operated solely based on the distance or angle between the working device and the work restriction area, the buzzer continued to operate whenever the working device was near the work restriction area, even in situations where the working device was unlikely to actually intrude into the work restriction area, thereby increasing operator fatigue and reducing work efficiency.

### Summary

According to a first embodiment of the present disclosure, provided is an alarm control system for construction machinery having a lower traveling body, an upper swivel body rotatably coupled to the lower traveling body, and a working device mounted on the upper swivel body and including a boom, an arm, and a bucket; the system including: a sensor unit configured to detect attitude information of the construction machinery; an operation lever configured to operate the construction machinery; a setting unit configured to set a work restriction area for the construction machinery; a visual alarm unit configured to actuate a visual alarm when the construction machinery approaches the work restriction area; an audible alarm unit configured to actuate an audible alarm when the construction machinery approaches the work restriction area; and an alarm control unit configured to: calculate a remaining distance or a remaining angle from the construction machinery to the work restriction area, and actuate the visual alarm unit and the audible alarm unit when the calculated remaining distance or the calculated remaining angle is equal to or less than a previously stored reference value; determine, based on a signal from the operation lever, whether the construction machinery is likely to intrude into the work restriction area, and prevent actuation of the audible alarm unit when the construction machinery is not likely to intrude into the work restriction area even when the calculated remaining distance or the calculated remaining angle is equal to or less than the reference value. A technical advantage is that, when the construction machinery is unlikely to intrude into the work restriction area, the audible alarm does not actuate, thereby reducing operator fatigue and improving work efficiency.

Optionally, in some embodiments, the alarm control unit may not actuate the audible alarm unit when the operation lever is operated so that the construction machinery moves away from the work restriction area.

Optionally, in some embodiments, the alarm control unit may not actuate the audible alarm unit when the operation lever is in a neutral position.

Optionally, in some embodiments, the alarm control unit may actuate the audible alarm unit when the construction machinery is located in the work restriction area and the operation lever is operated so that the construction machinery moves toward the work restriction area.

Optionally, in some embodiments, the alarm control unit may not actuate the audible alarm unit when the remaining distance or remaining angle from the construction machinery to the work restriction area increases.

Optionally, in some embodiments, when a plurality of work restriction areas are set, the alarm control unit may not actuate the audible alarm unit if the construction machinery is not likely to intrude into any of the work restriction areas.

Optionally, in some embodiments, the alarm control unit may control the audible alarm unit so that the volume of the audible alarm increases as the construction machinery approaches the work restriction area.

Optionally, in some embodiments, the alarm control unit may control the visual alarm unit so that the color saturation of the visual alarm increases as the construction machinery approaches the work restriction area.

The embodiments described above and below, the appended claims, and/or the examples disclosed herein may be appropriately combined as would be apparent to a person of ordinary skill in the art.

Additional features and advantages are described in the following description, claims, and drawings, and will be recognized in part as being readily apparent to those skilled in the art or through the practice of the disclosures set forth herein.

### Brief Description of the Drawings

With reference to the accompanying drawings, a more detailed description of the embodiments of the present disclosure cited below as examples follows.
FIG. 1 is a perspective view illustrating construction machinery according to one embodiment of the present invention.
FIG. 2 is a block diagram illustrating a basic configuration of the alarm control system of the construction machinery.
FIG. 3 illustrates various examples of work restriction areas.
FIG. 4A illustrates the visual alarm unit with the visual alarm actuated.
FIG. 4B illustrates the audible alarm unit with the audible alarm actuated.
FIG. 5 is a block diagram of the alarm control unit.
FIG. 6 illustrates points of the working device that serve as reference points when the remaining distance calculation unit calculates distance.
FIG. 7 illustrates an example of calculating the distance between the height limit plane and the points of the working device.
FIG. 8 illustrates a situation in which the working device approaches the height limit plane while performing a boom-down operation.
FIG. 9 illustrates a situation in which the working device approaches the height limit plane while performing an arm-in operation.
FIG. 10 illustrates a situation in which the working device approaches the depth limit plane while performing an arm-out operation.
FIG. 11 illustrates a situation in which the working device approaches the height limit plane and the reach out limit plane while performing a boom-down operation.

### Detailed Description

The embodiments described below provide the information necessary for a person of ordinary skill in the art to practice the present disclosure.

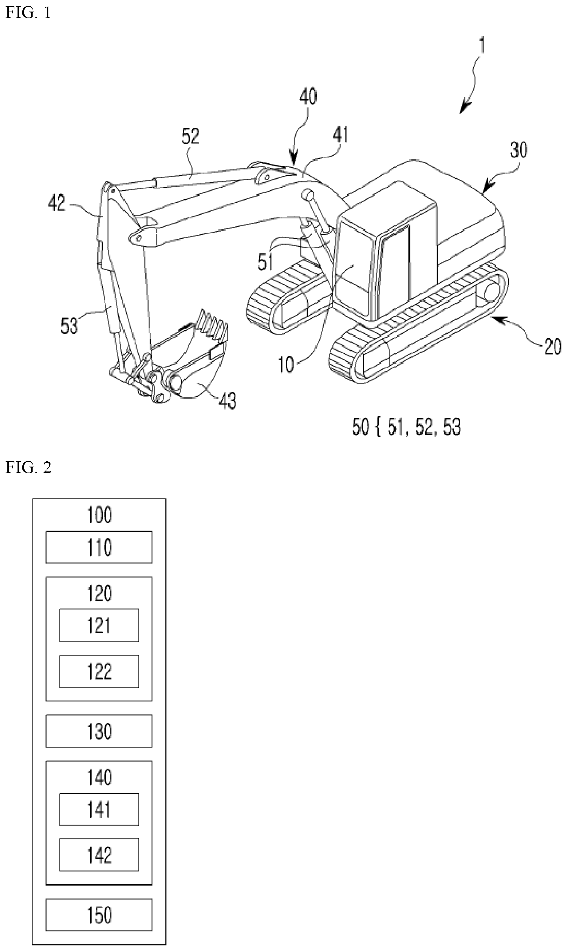

FIG. 1 is a perspective view illustrating construction machinery according to one embodiment of the present invention.

Referring to FIG. 1, construction machinery (1), such as an excavator, includes a cab (10), a lower traveling body (20), an upper swivel body (30) rotatably mounted on the lower traveling body (20), a working device (40) vertically movable on the upper swivel body (30), and a hydraulic actuator (50).

The working device (40) is formed as a multi-joint device and includes a boom (41) having a rear end rotatably supported on the upper swivel body (30), an arm (42) having a rear end rotatably supported on the distal end of the boom (41), and a bucket (43) rotatably mounted on the distal end of the arm (42). The hydraulic actuator (50) includes a boom actuator (51), an arm actuator (52), and a bucket actuator (53). Furthermore, when hydraulic fluid is supplied in response to operation of the operator's operation lever, the boom actuator (51), the arm actuator (52), and the bucket actuator (53) respectively actuate the boom (41), the arm (42), and the bucket (43).

FIG. 2 is a block diagram illustrating a basic configuration of the alarm control system of the construction machinery.

Hereinafter, with reference to FIGS. 1 and 2, the alarm control system of the construction machinery will be described.

The alarm control system (100) of the construction machinery (1) is configured to provide visual and audible alarms so that the operator can recognize when the upper swivel body (30) and the working device (40) approach a pre-set work restriction area, and may include a sensor unit (110), an operation lever (120), a setting unit (130), an alarm unit (140), and an alarm control unit (150).

The sensor unit (110) can measure the position, posture, and/or angles of the upper swivel body (30), the boom (41), the arm (42), and the bucket (43), as well as the tilt of the main body of the construction machinery (1), using a plurality of inertial measurement units (IMUs), angle sensors, and the like. For example, inertial measurement units may be arranged on each of the boom (41), the arm (42), and the bucket (43), which may be configured to detect the respective angles of the boom (41), the arm (42), and the bucket (43). In addition, the sensor unit (110) may be configured to detect the rotation angle of the upper swivel body (30). The information measured by the sensor unit (110) may be provided to the alarm control unit (150).

The operation lever (120) may be a hydraulic joystick or an electric joystick, and preferably, the operation lever (120) is an electric joystick configured to generate an electrical signal proportional to the operator's input and provide the signal to the alarm control unit (150).

The operation lever (120) may be configured to operate the rotation of the upper swivel body (30), the vertical movement of the boom (41), and the pivoting of the arm (42) and the bucket (43). The operation lever (120) may be configured to include a first operation lever (121) and a second operation lever (122).

The first operation lever (121) may be used to operate the arm (42) and to operate the rotation of the upper swivel body (30). When the first operation lever (121) is operated forward by the operator, the arm actuator (52) is actuated to perform an arm-out operation, i.e., to extend the arm (42). When the first operation lever (121) is operated rearward by the operator, the arm actuator (52) is actuated to perform an arm-in operation, that is, to retract the arm (42). In addition, when the first operation lever (121) is operated to the left by the operator, the swivel hydraulic motor (not shown) is actuated to perform a left rotation operation, that is, to rotate the upper swivel body (30) to the left. When the first operation lever (121) is operated to the right by the operator, the swivel hydraulic motor is actuated to perform a right rotation operation, that is, to rotate the upper swivel body (30) to the right.

The second operation lever (122) may be used to operate the boom (41) and to operate the bucket (43). When the second operation lever (122) is operated forward by the operator, the boom actuator (51) is actuated to perform a boom-down operation, that is, to lower the boom (41). When the second operation lever (122) is operated rearward by the operator, the boom actuator (51) is actuated to perform a boom-up operation, that is, to raise the boom (41). In addition, when the second operation lever (122) is operated to the left by the operator, the bucket actuator (53) is actuated to perform a bucket-in operation, that is, to close the bucket (43). When the second operation lever (122) is operated to the right by the operator, the bucket actuator (53) is actuated to perform a bucket-out operation, that is, to open the bucket (43).

However, the present disclosure is not limited thereto, and it is understood that the operation modes of the first operation lever (121) and the second operation lever (122) may be changed by the operator. For example, the first operation lever (121) may be used to operate the boom (41) and the bucket (43), and the second operation lever (122) may be used to operate the arm (42) and the upper swivel body (30).

Using the setting unit (130), the operator may set a work restriction area that limits the movement of the construction machinery. The setting unit (130) may be configured as a display, but is not limited thereto, and may alternatively be configured as a switch.

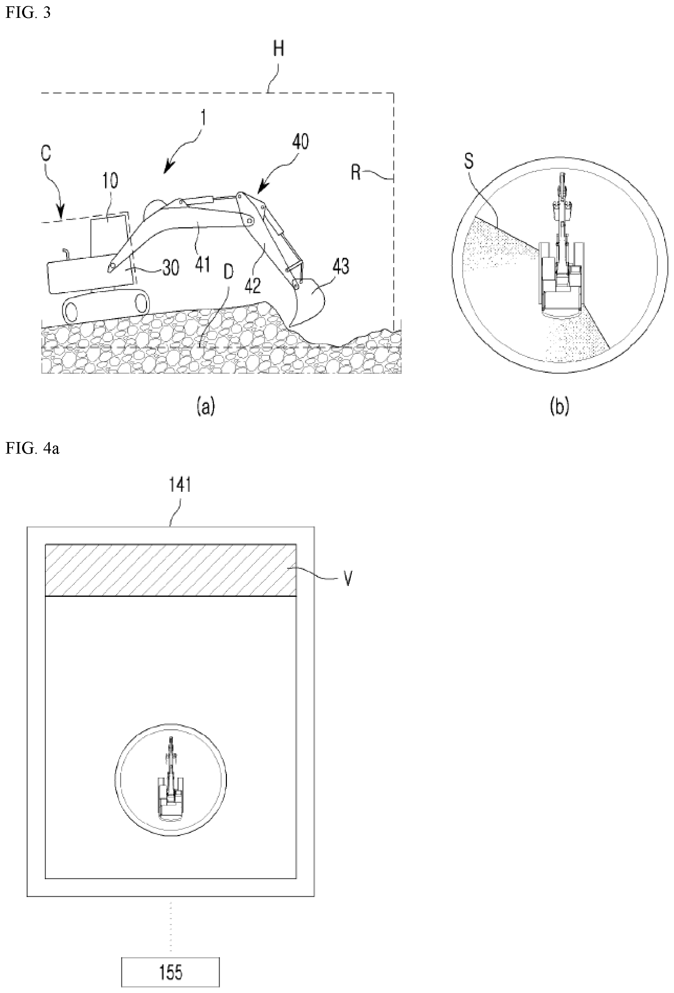

FIG. 3 illustrates various examples of work restriction areas.

Referring to FIG. 3, the work restriction area prevents the upper swivel body (30) and the working device (40) from moving beyond a preset position or angle, and may be broadly classified into five types: a height limit plane (H), a depth limit plane (D), a reach-out limit plane (R), a cab avoidance limit plane (C), and a swing limit plane (S).

The height limit plane (H) may, for example, be used to restrict the maximum raising height of the boom (41), arm (42), and bucket (43) when a utility pole wire or communication line is positioned above the construction machinery (1).

The depth limit plane (D) may, for example, be used to restrict the maximum depth of the boom (41), arm (42), and bucket (43) when gas pipes, water pipes, or the like are buried at a predetermined depth in the ground.

The reach out limit plane (R) may, for example, be used to restrict the maximum horizontal reach of the boom (41), arm (42), and bucket (43) when obstacles are present around the construction machinery (1).

The cab avoidance limit plane (C) may, for example, be used to prevent the boom (41), arm (42), and bucket (43) from colliding with the cab (10).

The swing limit plane (S) is configured to restrict the swivel angle of the upper swivel body (30), and may, for example, be used to limit the maximum swivel angle of the upper swivel body (30) when obstacles are present around the construction machinery (1).

These work restriction areas may be set in plurality as needed.

The alarm unit (140) notifies the operator of a risk associated with approaching the work restriction area by providing a visual alarm and an auditory alarm when the construction machinery (1) approaches the work restriction area. The alarm unit (140) includes a visual alarm unit (141) and an audible alarm unit (142).

FIG. 4A shows the visual alarm unit with the visual alarm actuated.

The visual alarm unit (141) may be configured as a display provided inside the cab (10), and thereby notifies the operator of a visual alarm.

Further, the visual alarm unit (141) is configured to display different visual alarms corresponding to each work restriction area. For example, with reference to FIGS. 3 and 4A, when the working device (40) approaches the height limit plane (H), the visual alarm unit (141) is configured to display a visual alarm (V) at an upper portion of the display. In addition, in the case where the working device (40) approaches the depth limit plane, the visual alarm unit (141) is configured to display a visual alarm at a lower portion of the display. Thereby, the operator can intuitively identify which work restriction area corresponds to the visual alarm displayed on the display.

In addition, to allow the operator to easily recognize the visual alarm, the visual alarm (V) is displayed in a color different from the background color of the visual alarm unit (141), or the visual alarm (V) is displayed in a blinking manner. Preferably, the visual alarm (V) is displayed on the display as a gradient with continuously changing colors. The visual alarm unit (141) is controlled by a visual alarm control unit (155) to be described later.

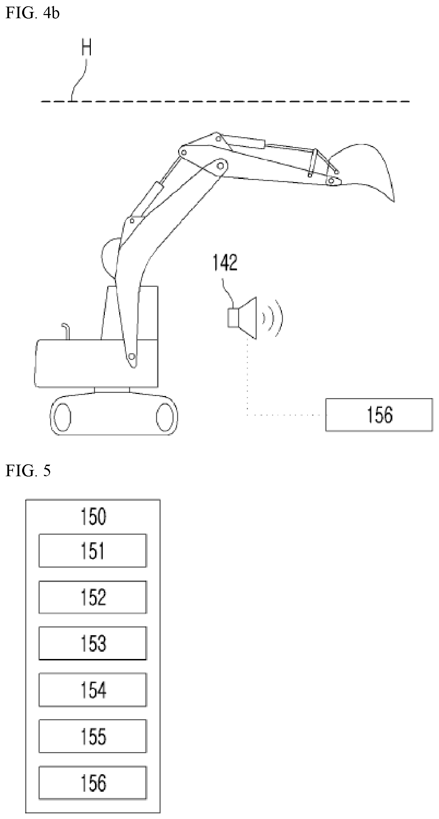

FIG. 4B illustrates the audible alarm unit in which an auditory alarm is actuated.

The audible alarm unit (142) may be configured as a speaker provided inside the cab (10), and thereby notifies the operator of an auditory alarm. For convenience, in FIG. 4B, the audible alarm unit (142) is illustrated outside the cab (10). Here, the auditory alarm includes a mechanical sound, such as a general buzzer tone. The audible alarm unit (142) is controlled by an auditory alarm control unit (156) to be described later.

FIG. 5 is a block diagram of the alarm control unit.

Referring to FIG. 5, the alarm control unit (150) includes a data receiving unit (151), a storage unit (152), a remaining angle calculation unit (153), a remaining distance calculation unit (154), a visual alarm control unit (155), and an auditory alarm control unit (156).

The data receiving unit (151) is configured to receive information output from various devices during actuation of the construction machinery. For example, the data receiving unit (151) is configured to receive attitude information detected by the sensor unit (110). In addition, the data receiving unit (151) is configured to receive information as operation signals of the operation lever (120), such as the operation direction, for the upper swivel body (30) and the boom (41), arm (42), and bucket (43). In addition, the data receiving unit (151) is configured to receive information regarding the work restriction area set by the setting unit (130).

The storage unit (152) can store a reference value of the work restriction area, which serves as the actuating standard of the alarm unit (140).

At this time, the storage unit (152) is configured to store reference values for each of the height limit plane, depth limit plane, reach out limit plane, cab avoidance limit plane, and swing limit plane. For example, the first reference value is stored for the height limit plane, the second reference value is stored for the depth limit plane, the third reference value is stored for the reach out limit plane, the fourth reference value is stored for the cab avoidance limit plane, and the fifth reference value is stored for the swing limit plane.

The storage unit (152) is configured to store, for each work restriction area, the operation direction of the operation lever that serves as a deactivation criterion for the auditory alarm.

The remaining angle calculation unit (153) is configured to calculate a remaining angle between the upper swivel body (30) and the swing limit plane based on the swing angle of the upper swivel body (30) and the swing limit plane information received by the data receiving unit (151).

The remaining angle calculation unit (153) outputs the calculated remaining angle to the visual alarm control unit (155) and the auditory alarm control unit (156).

The remaining distance calculation unit (154) is configured to calculate a distance between the working device (40) and the work restriction area based on attitude information of the working device (40) and work restriction area information received by the data receiving unit (151). In detail, the remaining distance calculation unit (154) calculates the remaining distance between the working device (40) and the work restriction area using the angles of the boom (41), the arm (42), and the bucket (43) measured by the sensor unit (110), as well as the lengths of the boom (41), the arm (42), and the bucket (43).

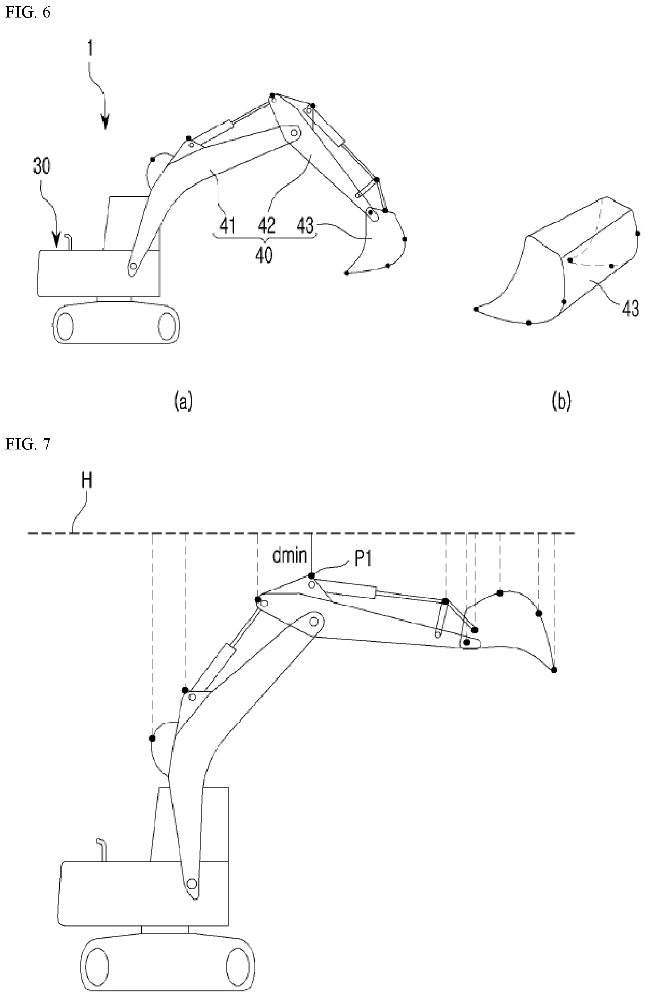

FIG. 6 illustrates points of the working device that serve as reference points when the remaining distance calculation unit calculates distance.

Referring to FIGS. 5 and 6, the remaining distance calculation unit (154) measures the distance to the work restriction area based on multiple points located on the boom (41), arm (42), and bucket (43). These points can be provided at various positions of the working device (40) and are changeable.

FIG. 7 illustrates an example of calculating the distance between the height limit plane and the points of the working device.

Referring to FIGS. 5 and 7, the remaining distance calculation unit (154) calculates a remaining distance between each point and the height limit plane (H), and outputs the remaining distance (dmin) measured at the point (P1) closest to the height limit plane (H) to the visual alarm control unit (155) and the auditory alarm control unit (156).

The visual alarm control unit (155) compares the remaining angle calculated by the remaining angle calculation unit (153) or the remaining distance calculated by the remaining distance calculation unit (154) with reference values of the work restriction area stored in the storage unit (152), and when the remaining angle or remaining distance is equal to or less than the stored reference value, actuates the visual alarm unit (141) to display a visual alarm. At this time, the visual alarm control unit (155) does not consider the operation direction of the operation lever.

In addition, the visual alarm control unit (155) is configured to control the visual alarm unit (141) to provide stepwise visual alarms according to the remaining distance. For example, the visual alarm control unit (155) actuates the visual alarm unit (141) so that the saturation of the visual alarm color increases as the construction machinery (1) approaches the work restriction area. Through this, the operator can intuitively recognize the degree of approach of the construction machinery (1) to the work restriction area.

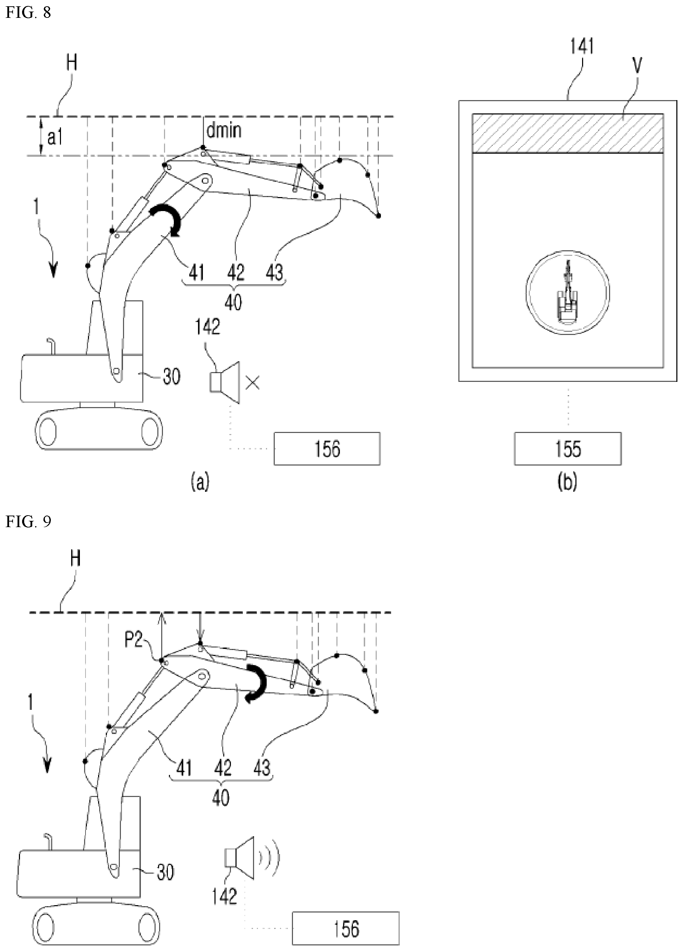

FIG. 8 illustrates a situation in which the working device approaches the height limit plane while performing a boom-down operation.

Referring to FIGS. 5 and 8, because the remaining distance (dₘᵢₙ) measured at the point closest to the work restriction area is equal to or less than the first reference value (a1) of the height limit plane (H) stored in the storage unit (152), the visual alarm control unit (155) actuates the visual alarm unit (141) to display a visual alarm (V), as illustrated in FIG. 8(B).

Meanwhile, the auditory alarm control unit (156) determines whether the upper swivel body (30) and the working device (40) are likely to intrude into a set work restriction area based on operation information of the operation lever (120) received by the data receiving unit (151) and on the remaining angle calculated by the remaining angle calculation unit (153) or the remaining distance calculated by the remaining distance calculation unit (154).

In principle, the auditory alarm control unit (156) also compares the remaining angle calculated by the remaining angle calculation unit (153) or the remaining distance calculated by the remaining distance calculation unit (154) with reference values stored in the storage unit (152), and when the remaining angle or remaining distance is equal to or less than the stored reference value, actuates the audible alarm unit (142) to provide an auditory alarm to the operator.

In addition, the auditory alarm control unit (156) is configured to control the audible alarm unit (142) to provide stepwise auditory alarms according to the remaining distance. For example, the auditory alarm control unit (156) actuates the audible alarm unit (142) so that the volume of the auditory alarm increases as the construction machinery (1) approaches the work restriction area. Through this, the operator can intuitively recognize the degree of approach of the construction machinery (1) to the work restriction area.

However, in a situation where the operator performs a boom-down operation, as illustrated in FIG. 8, even though the working device (40) is not likely to intrude into the height limit plane (H), providing an auditory alarm based solely on the distance between the working device (40) and the height limit plane (H) causes the auditory alarm to continuously operate, which increases operator fatigue and reduces work efficiency.

Accordingly, the auditory alarm control unit (156) does not actuate the audible alarm unit (142) when, based on the operation direction of the operation lever, the construction machinery is not likely to intrude into the work restriction area. Hereinafter, a case where the auditory alarm control unit (156) determines that the construction machinery is not likely to intrude into the work restriction area is described.

In principle, the auditory alarm control unit (156) determines that the construction machinery (1) is not likely to intrude into the work restriction area when the operation lever is operated to move the construction machinery (1) away from the work restriction area. Alternatively, the auditory alarm control unit (156) determines that the construction machinery is not likely to intrude into the work restriction area when the remaining distance or remaining angle monotonically increases.

For example, as illustrated in FIG. 8, when the operator performs a boom-down operation while the working device (40) is close to the height limit plane (H), all points on the boom (41), arm (42), and bucket (43) move away from the height limit plane (H). That is, when the operation lever is operated to move the upper swivel body (30) or the working device (40) away from the work restriction area, the remaining angle or remaining distance increases. Accordingly, the auditory alarm control unit (156) determines that the construction machinery (1) is not likely to intrude into the work restriction area and does not actuate the audible alarm unit (142).

FIG. 9 illustrates a situation in which the working device approaches the height limit plane while performing an arm-in operation.

As illustrated in FIG. 9, when the operator performs an arm-in operation while the working device (40) is close to the height limit plane (H), the remaining distance increases for most points of the working device (40). However, in the case of the point (P2) located at the rear end of the arm (42), since it is positioned behind the rotation center of the arm (42), it approaches the height limit plane (H) and the remaining distance decreases.

That is, since a portion of the working device (40) exhibits a decrease in remaining distance with respect to the height limit plane (H), in this case the possibility that the construction machinery (1) intrudes into the work restriction area cannot be excluded. That is, in the height limit plane (H), an arm-in operation is not considered as a criterion for stopping the auditory alarm.

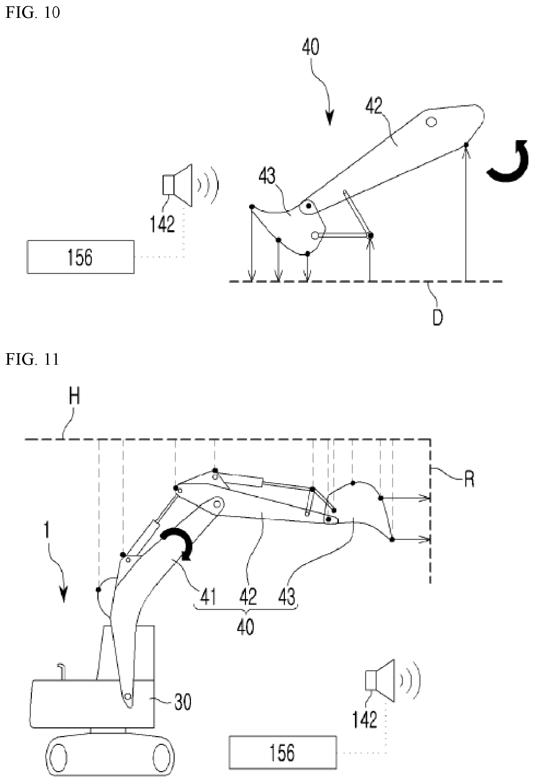

FIG. 10 illustrates a situation in which the working device approaches the depth limit plane while performing an arm-out operation.

In addition, as illustrated in FIG. 10, when the operator performs an arm-out operation while the working device (40) is close to the depth limit plane (D), the remaining distance increases for some points of the working device (40), whereas, in the case of a point located on the bucket (43), the remaining distance decreases as the point approaches the depth limit plane (D).

That is, since a portion of the working device exhibits a decrease in remaining distance with respect to the depth limit plane, in this case the possibility that the working device (40) intrudes into the work restriction area cannot be excluded. That is, in the depth limit plane, an arm-out operation is not considered as a criterion for stopping the auditory alarm.

As described above, the auditory alarm control unit (156) determines that the working device (40) is not likely to intrude into the work restriction area when all points of the working device (40) move away from the work restriction area. In one embodiment, the operation directions of the operation lever in which the working device is not likely to intrude into each work restriction area are summarized in the table below. However, the disclosure is not limited thereto, and the auditory alarm control unit (156) can determine that the working device (40) is not likely to intrude into the work restriction area when the minimum remaining distance (dₘᵢₙ) increases.

**Table 1**

| | Boom | Arm | Bucket |
|---|---|---|---|
| Height limit plane | Down | - | In |
| Depth limit plane | Up | - | - |
| Reach out limit plane | Up | In | In |
| Cab avoidance limit plane | Down | Out | Out |

Meanwhile, for the swing limit plane, only the swing direction of the upper swivel body needs to be considered. More specifically, the auditory alarm control unit (156) determines that the upper swivel body (30) is not likely to intrude into the work restriction area when the operation lever is operated to move it away from the swing limit plane, and determines that the upper swivel body (30) is likely to intrude into the work restriction area when the operation lever is operated to move it toward the swing limit plane.

In addition, the auditory alarm control unit (156) determines that the construction machinery is not likely to intrude into the work restriction area when the operation lever is in a neutral position. Since the upper swivel body (30) and the working device (40) do not move when the operation lever is in a neutral position, the auditory alarm control unit (156) does not actuate the audible alarm unit (142).

Meanwhile, when the construction machinery is located within the work restriction area, even if the operation lever is operated to move the upper swivel body (30) or the working device (40) toward the work restriction area, such movement is restricted by the work restriction area.

However, in this case, unlike when the operation lever is in a neutral position, it is necessary to notify the operator with an auditory alarm. Accordingly, in such a case, the auditory alarm control unit (156) determines that the construction machinery is likely to intrude into the work restriction area and actuates the audible alarm unit (142).

Meanwhile, when a plurality of work restriction areas are set, the auditory alarm control unit (156) does not actuate the audible alarm unit (142) only if the construction machinery is not likely to intrude into any of the work restriction areas.

FIG. 11 illustrates a situation in which the working device approaches the height limit plane and the reach out limit plane while performing a boom-down operation.

As illustrated in FIG. 11, when the working device (40) is close to the height limit plane (H) and the reach out limit plane (R) and the operator performs a boom-down operation, all points of the working device (40) move away from the height limit plane (H), whereas it approaches the reach out limit plane (R).

That is, in a situation as illustrated in FIG. 11, although the working device (40) is not likely to intrude into the height limit plane (H), it is likely to intrude into the reach out limit plane (R); therefore, the auditory alarm control unit (156) actuates the audible alarm unit (142).

As described above, in the present disclosure, the operation of the visual alarm and the auditory alarm is controlled independently, so that when the construction machinery is unlikely to intrude into the work restriction area, the auditory alarm does not actuate, thereby reducing operator fatigue and improving work efficiency.

The terminology used herein is employed solely to describe specific embodiments and is not intended to limit the present disclosure. As used herein, the singular forms "a," "an," and "the" are intended to include the plural forms unless the context clearly indicates otherwise. As used herein, the term "and/or" encompasses any and all possible combinations of one or more of the associated listed items. As used herein, the terms "comprises," "comprising," "includes," and/or "including" specify the presence of the stated functions, integers, steps, operations, elements, and/or components, but are understood not to exclude the presence or addition of one or more other functions, integers, steps, operations, elements, components, and/or groups thereof.

Although terms such as first and second may be used herein to describe various components, it is to be understood that these components are not limited by these terms. These terms are used solely to distinguish one element from another. For example, without departing from the scope of the present disclosure, the first component may be referred to as the second component, and similarly, the second component may be referred to as the first component.

Relative terms such as "below," "above," "upper side," "lower side," "horizontal," and "vertical" may be used herein to describe the relationship between one element and another as illustrated in the drawings. It should be understood that these terms, along with the terms discussed above, are intended to include different directions of the apparatus in addition to the directions illustrated in the drawings. When an element is described as being "connected" or "coupled" to another element, it is to be understood that the element may be directly connected or coupled to the other element, or may be connected or coupled via one or more intervening elements. In contrast, when an element is described as "directly connected" or "directly coupled" to another element, no intervening element exists therebetween.

Unless otherwise defined, all terms used herein (including technical and scientific terms) have the same meaning as commonly understood by those of ordinary skill in the art to which the present disclosure pertains. Additionally, the terms used herein are to be interpreted as having meanings consistent with their meanings in the context of this specification and the related art, and unless explicitly defined herein, are not to be construed in an idealized or overly formal manner.

## Claims

1. An alarm control system for construction machinery having a lower traveling body, an upper swivel body rotatably coupled to the lower traveling body, and a working device mounted on the upper swivel body and including a boom, an arm, and a bucket; the system comprising:
a sensor unit configured to detect attitude information of the construction machinery; an operation lever configured to operate the construction machinery;
a setting unit configured to set a work restriction area for the construction machinery;
a visual alarm unit configured to actuate a visual alarm when the construction machinery approaches the work restriction area; an audible alarm unit configured to actuate an audible alarm when the construction machinery approaches the work restriction area; and
an alarm control unit configured to: calculate a remaining distance or a remaining angle from the construction machinery to the work restriction area, and actuate the visual alarm unit and the audible alarm unit when the calculated remaining distance or the calculated remaining angle is equal to or less than a previously stored reference value;
determine, based on a signal from the operation lever, whether the construction machinery is likely to intrude into the work restriction area, and
prevent actuation of the audible alarm unit when the construction machinery is not likely to intrude into the work restriction area even when the calculated remaining distance or the calculated remaining angle is equal to or less than the reference value.

2. The alarm control system for construction machinery of claim 1, wherein, when the operation lever is operated so that the construction machinery moves away from the work restriction area, the alarm control unit does not actuate the audible alarm unit.

3. The alarm control system for construction machinery of claim 1, wherein, when the operation lever is in a neutral position, the alarm control unit does not actuate the audible alarm unit.

4. The alarm control system for construction machinery of claim 1, wherein, when the construction machinery is located in the work restriction area, if the operation lever is operated so that the construction machinery moves toward the work restriction area, the alarm control unit actuates the audible alarm unit.

5. The alarm control system for construction machinery of claim 1, wherein, when the remaining distance or the remaining angle from the construction machinery to the work restriction area increases, the alarm control unit does not actuate the audible alarm unit.

6. The alarm control system for construction machinery of claim 1, wherein, when a plurality of work restriction areas are set, the alarm control unit does not actuate the audible alarm unit if the construction machinery is not likely to intrude into any of the work restriction areas.

7. The alarm control system for construction machinery of claim 1, wherein the alarm control unit controls the audible alarm unit so that the volume of the audible alarm increases as the construction machinery approaches the work restriction area.

8. The alarm control system for construction machinery of claim 1, wherein the alarm control unit controls the visual alarm unit so that a color saturation of the visual alarm increases as the construction machinery approaches the work restriction area.
